# EUROPÄISCHE PATENTSCHRIFT

(11) **EP 1 923 133 B1**
(45) Veröffentlichungstag und Bekanntmachung des Hinweises auf die Patenterteilung: **26.07.2017**
(21) Anmeldenummer: 06022137.1
(22) Anmeldetag: 23.10.2006
(51) Int. Cl.: B01J 19/30

(54) **Gitterförmiger Füllkörper, insbesondere für Stoff- und/oder Wärmeaustauschkolonnen**
Grid like packing elements for use in mass and/or heat exchange columns
Eléments de ganissage en forme de grille pour des colonnes d'échange de matiére et/ou de chaleur

(43) Veröffentlichungstag der Anmeldung: 21.05.2008
(73) Patentinhaber: Vereinigte Füllkörper-Fabriken GmbH & Co. KG, 56235 Ransbach-Baumbach (DE)
(72) Erfinder: Schämmlein, Kurt, Dr. Dipl.-Chem., 55545 Bad Kreuznach (DE); Kind, Hanno, 56427 Siershahn (DE)
(74) Vertreter: Quermann, Helmut

(56) Entgegenhaltungen:
- EP-A2- 0 061 154
- WO-A-95/04246
- DE-A1- 2 739 236
- DE-U- 7 535 976
- FR-A1- 2 681 798
- GB-A- 1 596 725
- JP-A- 60 000 892
- JP-A- 63 028 497
- US-A1- 2002 063 344
- US-B1- 6 631 890

## Beschreibung

Die Erfindung betrifft einen gitterförmigen Füllkörper, insbesondere für Stoff- und/oder Wärmeaustauschkolonnen, die von einer Gas- und/oder Flüssigkeitsströmung durchsetzt werden, mit die Außenkontur des Füllkörpers bildenden Außenstäben und im Inneren des Füllkörpers angeordneten Innenstäben, wobei der Füllkörper eine einem Ellipsoid ähnliche Form aufweist und mindestens zwei in Abstand zueinander angeordnete Außenstäbe aufweist, die senkrecht zu anderen Außenstäben angeordnet sind.

Es ist bekannt, Füllkörper verschiedener Ausführungsformen als regellose Schüttungen in Kolonnen, Reaktoren und anderen Behältern für den Stoff- und Wärmeaustausch einzusetzen, wobei thermische, chemische oder physikalische Verfahren wie Absorption, Desorption, Rektifikation, Extraktion und andere Trennprozesse betrieben werden, bei denen verschiedene Phasen bzw. Medien, zum Beispiel gasförmig/flüssig, mit möglichst geringem Aufwand effektiv und innig in Kontakt gebracht werden sollen. Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen. Der Umfang der Benutzung hängt u.a. von den Flüssigkeitseigenschaften, den Füllkörpermaterialeigenschaften, der Berieselungsdichte und von weiteren Faktoren ab. Das Füllkörperbett weist gegenüber der Strömung der Phasen einen bestimmten Druckverlust auf, der vom Gasbelastungsfaktor, der Berieselungsdichte, dem Füllkörpertyp, der Füllkörpergröße und weiteren Parametern abhängig ist.

Bekannt ist weiterhin, dass die Variierung von einem Füllkörper mit geschlossener Oberfläche auf einen Füllkörper, dessen Oberfläche im weitesten Sinne Öffnungen bzw. Durchbrüche aufweist, deutliche Verbesserungen hinsichtlich der Senkung des Druckverlusts über die Füllkörperschüttung ermöglicht, wobei sich durchaus keine nennenswerten Leistungsminderungen bezüglich Stoff- bzw. Wärmeaustausch ergeben müssen. Allerdings muss bei manchen Ausführungsformen bzw. in manchen Fällen besonders auf eine geeignete Vorverteilung der Medien, d.h. in der Regel der Flüssigkeit, durch Auswahl eines geeigneten Flüssigkeitsverteilers, zum Beispiel mit einer geeigneten Anzahl und Verteilung von Tropfstellen, geachtet werden, insbesondere, wenn es sich um größere Kolonnendurchmesser handelt.

In einer regellosen Schüttung werden die Füllkörper und deren meist in einer gedachten Vorzugsrichtung parallel verlaufenden Füllkörperachsen nach einer technischen Befüllung in der Praxis nahezu regellos nach dem Zufallprinzip über alle möglichen Ausrichtungen in Bezug zu der Kolonnenachse bzw. Behälterachse verteilt sein, sofern die Füllkörper nicht extrem flach sind und das Nennmaß des betreffenden Füllkörpers entsprechend klein gegenüber dem Kolonnendurchmesser ist.

Um zu erreichen, dass einerseits die Waschflüssigkeit und der Gasstrom über den gesamten Kolonnenquerschnitt gleichmäßig verteilt sind und andererseits ein niedriger Druckverlust resultiert, muss ein Füllkörper eine nach innen offene Struktur dergestalt aufweisen, dass sowohl die Gasphase als auch die Flüssigkeit in ausreichendem Maße auch in das Innere des Füllkörpers gelangen und die beiden Phasen auch im Inneren intensiv miteinander in Kontakt treten. Dies lässt sich am besten realisieren, wenn neben den auf Teilflächen abfließenden Flüssigkeitsteilströmen auch Flüssigkeitstropfen gebildet werden.

Ein gitterförmiger Füllkörper mit den Merkmalen des Oberbegriffs des Patentanspruchs 1 ist aus der DE 75 35 976 U bekannt.

Gitterförmige Füllkörper, die eine einem Ellipsoid ähnliche Form aufweisen, sind ferner aus den Druckschriften DE 23 13 287 A1 und DE 27 39 236 A1 bekannt geworden. In diesen sind kugelförmige Füllkörper mit einem einzigen umlaufenden Außenstab und mehreren dazu senkrecht verlaufenden anderen, annähernd kreisförmigen Stäben beschrieben, wobei die Querschnitte des umlaufenden Außenstabes und der anderen Außenstäbe rechteckig, quadratisch oder trapezförmig ausgeführt sind. Im Falle des trapezförmigen Querschnitts wird in der DE 27 39 236 A1 ausdrücklich darauf hingewiesen, dass sich der Querschnitt stets in das Kugelinnere hinein verjüngt, um die Flüssigkeit verbessert in das Füllkörperinnere hinein zu befördern.

Füllkörper, insbesondere für Stoff- und/oder Wärmeaustauschkolonnen, wobei die Füllkörper eine einem Ellipsoid ähnliche Form aufweisen, sind ferner in der JP 60 000892 A, WO 95/04246 A, FR 2 681 798 A1, US 6,631,860 B1 und JP 63 028497 A beschrieben.

Verdrillte Füllkörper zur Verwendung bei Stoff- und/oder Wärrrieaustauschkolonnen sind in der US 2002/0063344 A1, GB 1,596,725 A und EP 0 061 154 A2 beschrieben.

Aufgabe der vorliegenden Erfindung ist es, einen Füllkörper der eingangs genannten Art so weiter zu bilden, dass dieser eine hohe mechanische Festigkeit bei möglichst großer Oberfläche, insbesondere möglichst großer äußerer Oberfläche, zum Zwecke eines guten Stoff- bzw. Wärmeaustauschs, aufweist.

Gelöst wird die Aufgabe bei einem Füllkörper der eingangs genannten Art dadurch, dass der Füllkörper zwei Teilbereiche eines annähernden Rotationsellipsoids, sowie einen zwischen den beiden Teilbereichen angeordneten zylindrischen Bereich aufweist, sowie im Übergang vom jeweiligen die Form eines annähernden Rotationsellipsoids aufweisenden Teilbereich zum zwischen den Teilbereichen angeordneten zylindrischen Bereich, ein umlaufender Außenstab angeordnet ist.

Die zwei umlaufenden Außenstäbe verleihen dem Füllkörper eine hohe mechanische Festigkeit. Eine nachteilige Verformung des Füllkörpers wird somit auch dann wirksam vermieden, wenn die Füllkörper in einer hohen regellosen Schüttung angeordnet werden. Die umlaufenden Außenstäbe versteifen den annähernd als Ellipsoid ausgebildeten Füllkörper, womit der Füllkörper einer-vielfältigen Formgestaltung zugänglich ist. Bei allen Ausführungsformen wird es als besonders vorteilhaft angesehen, wenn die umlaufenden Außenstäbe parallel zueinander angeordnet sind.

Im Sinne der Erfindung ist der Begriff Stab umfassend zu verstehen. Hierunter sind auch streifenförmige Elemente zu verstehen.

Der Teilbereich des jeweiligen annähernden Rotationsellipsoids ist insbesondere annähernd dem Teilbereich eines zusammengedrückten Rotationsellipsoids oder eines langgestreckten Rotationsellipsoids ausgebildet. Zwischen diesen . Teilbereichen erstreckt sich der zylindrische Bereich. Im Übergang vom jeweiligen die Form des annähernden Rotationsellipsoids aufweisenden Teilbereich zum zwischen den beiden Teilbereichen befindlichen zylindrischen Bereich ist einer der beiden umlaufenden Außenstäbe angeordnet.

Die mindestens zwei umlaufenden Außenstäbe haben nicht nur die Aufgabe, die mechanische Stabilität des Füllkörpers zu erhöhen, sondern führen auch dazu, dass der Füllkörper eine vergrößerte äußere Oberfläche aufweist, mit der Folge eines guten Stoff- bzw. Wärmeaustauschs.

Der erfindungsgemäße Füllkörper besteht insbesondere aus Kunststoff. Es ist durchaus denkbar, diesen stattdessen aus Metall oder Keramik herzustellen.

Gemäß einer bevorzugten Weiterbildung der Erfindung ist vorgesehen, dass die umlaufenden Außenstäbe außen mit der Außenkontur der anderen Außenstäbe im Kreuzungsbereich der Außenstäbe fluchten. Somit stehen die umlaufenden Außenstäbe rußen nicht über die äußere Kontur der anderen Außenstäbe vor. In der Schüttung können somit Füllkörper im Bereich der umlaufenden Außenstäbe nicht verhaken. Auch ergibt sich ein homogenes Äußeres der Füllkörper, somit ohne weit vorstehende äußere Kanten.

Gemäß einer vorteilhaften Ausführungsform der Erfindung ist des Weiteren vorgesehen, dass die Außen- und/oder Innenstäbe eine einem Dreieck, einem Trapez, einem L, einem Kranz oder einem Rechteck identische oder ähnliche Querschnittsform aufweisen. Die Außenstäbe sollten zudem eine sich verjüngende Querschnittsform aufweisen, wobei die Verjüngung über die gesamte Umlauflänge oder zumindest eine Teillänge dieser Außenstäbe nach außen gerichtet ist. Diese Verjüngung nach außen ist von besonderem Vorteil unter dem Aspekt eines minimalen Druckverlusts.

Die Außenstäbe und/oder Innenstäbe können eine Längs- und/oder Querprofilierung aufweisen.

Der jeweilige Außenstab weist vorteilhaft die Form einer Ellipse oder eines Kreises auf.

Dieser möglichst niedrige Druckverlust bei gleichzeitig guten Flüssigkeitsquerverteilungseigenschaften - jeweils über das ganze Füllkörperbett betrachtet - und auch niedrige Herstellungskosten sind von besonderer Bedeutung. Diese Anforderungen werden insbesondere dadurch erreicht, dass alle oder ein Teil der in einer gedachten äußeren Mantelfläche des Füllkörpers liegenden Stäbe in ihrer Grundform ideal teilkreisförmig, unregelmäßig oder regelmäßig in verschiedenen Richtungen gewellt, beispielsweise nussförmig gewellt oder teilgewellt mit geradlinigen Anteilen, verdrillt, glatt, längs- oder querprofiliert, zum überwiegenden Teil in einer Querschnittsform ausgeführt sind, die einem Dreieck oder einem Trapez oder einer ähnlichen Form entspricht, wobei aber die spitzen oder schmalen Seiten bzw. schmäleren Teilflächen überwiegend nach außen gerichtet sind. Sie verjüngen sich also überwiegend nach außen und bringen somit jedweder Strömung von vorneherein einen geringen bzw. minimalen Strömungswiderstand entgegen. Um die äußere Struktur möglichst offen zu gestalten, d.h. damit von vorneherein sowohl von der strömenden Gasphase als auch von der strömenden Flüssigphase ein möglichst großer Anteil auch in das Füllkörperinnere gelangt, werden zweckmäßig alle Stäbe möglichst schrank ausgeführt. Im Inneren des Füllkörpers können eine Vielzahl von Stäben mit teilweise offenen Enden vorhanden sein, die beliebig zueinander ausgerichtet sein können.

In bevorzugter Weise ist die Querschnittsform dieser umlaufender Außenstäbe abschnittsweise abwechselnd ein sich nach außen verjüngendes Dreieck bzw. Trapez bzw. ähnliche Form und ein sich nach innen verjüngendes Dreieck bzw. Trapez bzw. ähnliche Form. Der äußere Bereich dieser umlaufenden Außenstäbe kann auch jeweils mit Abtropfnasen besetzt sein. Im Innenbereich des Füllkörpers sollten eine Vielzahl von Abtropfnasen oder -stäben vorhanden sein, die mit oder auch ohne Oberflächenprofilierung ausgeführt sein können, so dass sie aufgrund der strömungsoffenen äußeren Füllkörperform in den Innenraum gelangende Flüssigkeit an vielen Teilflächen ablaufen und auch zwecks Tropfenbildung an den Nasen oder Stabenden abtropfen kann.

Schließlich ist gemäß einer spezifischen Gestaltung des Füllkörpers vorgesehen, dass die zwischen zwei umlaufenden Außenstäben angeordneten Außenstäbe, bezogen auf die Umfangserstreckung der Außenstäbe, seitlich versetzt an den umlaufenden Außenstäben angreifen.

Darüber hinaus können Außenstäbe, insbesondere die umlaufenden Außenstäbe, gewellt verlaufen.

In den Figuren ist die Erfindung anhand einer bevorzugten Ausführungsform dargestellt, ohne hierauf beschränkt zu sein.

Es zeigt:

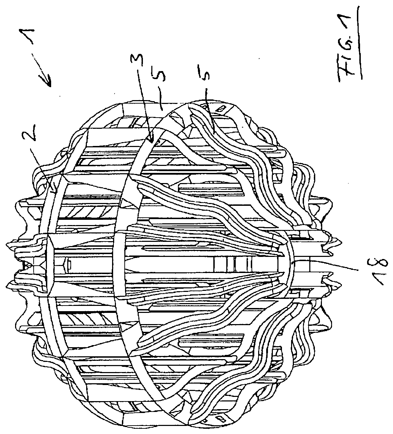

- Figur 1: den Füllkörper in einer isometrischen Darstellung schräg von unten gesehen,

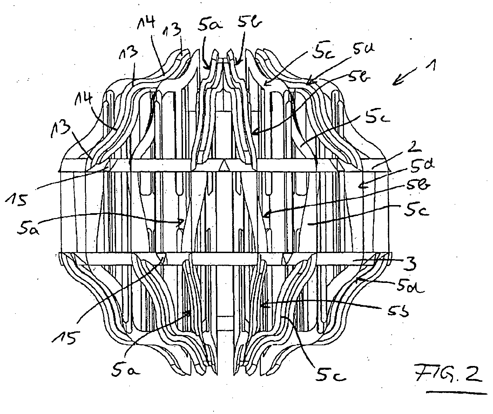

- Figur 2: eine Vorderansicht des Füllkörpers,

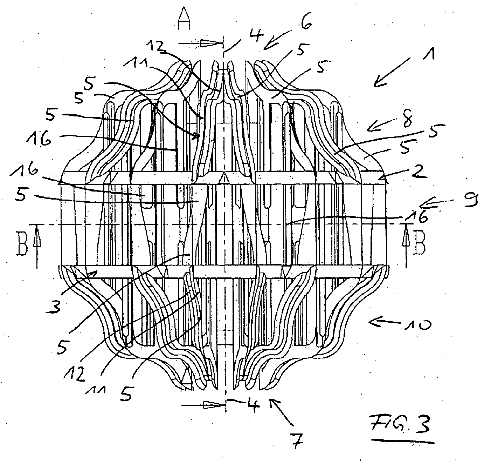

- Figur 3: eine Seitenansicht des Füllkörpers,

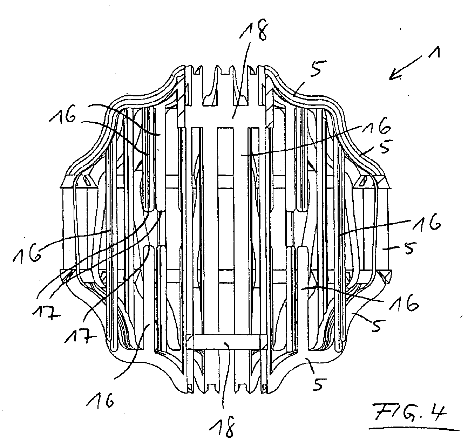

- Figur 4: einen Schnitt durch den Füllkörper gemäß der Linie A-A in Figur 3,

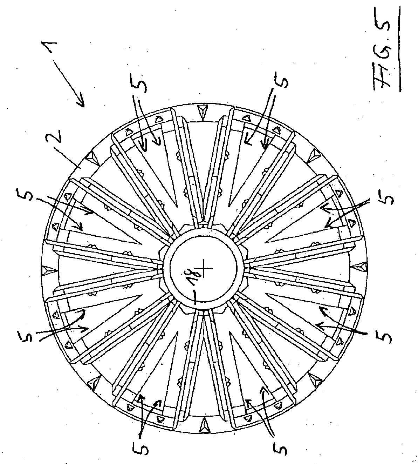

- Figur 5: eine Draufsicht des Füllkörpers und

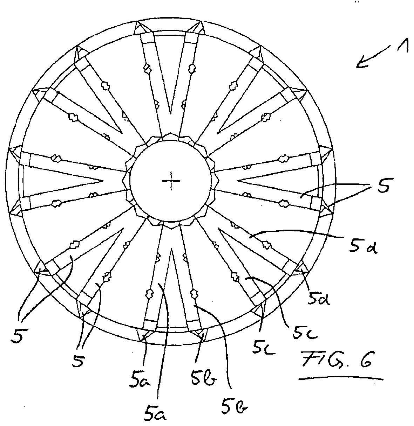

- Figur 6: einen Schnitt durch den. Füllkörper gemäß der Linie B-B in Figur 3.

Veranschaulicht ist in den Figuren der gitterförmige Füllkörper 1, der insbesondere bei Stoff- und/oder Wärmeaustauschkolonnen, die von einer Gas- und/oder Flüssigkeitsströmung durchsetzt werden, im Zusammenhang mit einer Vielzahl weiterer derartiger Füllkörper verwendet wird.

Die Außenkontur des annähernd Kugelform aufweisenden Füllkörpers 1 bilden einerseits zwei umlaufende Außenstäbe 2 und 3, die in Abstand zueinander und parallel zueinander angeordnet sind, wobei die durch den jeweiligen Außenstab 2 bzw. 3 gebildete Ebene senkrecht zur zentralen Achse 4 des Füllkörpers 1 angeordnet ist. Der jeweilige Außenstab 2 bzw. 3 weist die Form eines Kreisringes auf.

Bestandteil der Außenkontur des Füllkörpers 1 bilden ferner eine Vielzahl anderer Außenstäbe, vorliegend sechzehn Außenstäbe, die sich in Art von Meridianen erstrecken und im Bereich der beiden Außenstäbe 2 und 3 senkrecht zu diesen angeordnet sind. Der Einfachheit halber ist bei der nachfolgenden Beschreibung der jeweilige andere Außenstab, somit der Stab, der kein umlaufender Außenstab 2 bzw. 3 ist, als Meridianstab bezeichnet.

Der jeweilige Meridianstab 5, wobei nachfolgend zur Unterscheidung einzelner Meridianstäbe ergänzend zur Ziffer 5 ein Buchstabe angefügt ist, erstreckt sich von dem einen, oberen Achsende 6 zum unteren Achsende 7 des Füllkörpers 1. Der Füllkörper 1 weist einen oberen Teilbereich 8, einen mittleren Teilbereich 9 und einen unteren Teilbereich 10 auf. Der mittlere Teilbereich 9 weist die Form eines flachen Zylinders auf. An diesen schließen sich oben und unten die Teilbereiche 8 und 10 an. Der Teilbereich 8 ist nach oben gewölbt gestaltet, der untere Teilbereich 10 nach unten gewölbt gestaltet. Die Teilbereiche 8 und 10, konkret die Umhüllende des jeweiligen Teilbereichs 8 bzw. 10, weist die Form eines Teilbereichs eines annähernd als Ellipsoid gestalteten Körpers auf.

Die einzelnen Meridianstäbe 7 gehen von einem oberen zentralen Bereich des Füllkörpers 1 aus, bis zum Außenstab 2, von dort bis zum Außenstab 3 und von dort schließlich zu einem unteren zentralen Bereich des Füllkörpers 1. Jeder Meridianstab 5 weist drei Bereiche auf. Im oberen Teilbereich 8 ist der Meridianstab 5 gewellt ausgebildet und besitzt ein L-förmiges Profil, wobei der eine Schenkel des L nach außen gerichtet ist, womit der andere Schenkel 12 des L, der senkrecht zu dem Schenkel 11 angeordnet ist, in Richtung der Außenkontur des Füllkörpers 1 gerichtet ist. Der Meridianstab 5 im oberen Teilbereich 8 ist mit dem Außenstab 2 verbunden, wobei die Außenkontur des Schenkels 11 mit der Außenkontur des Außenstabs 2 übereinstimmt, somit der Außenstab 2 außen nicht über den Meridianstab 5 hervorsteht und auch nicht dort zurückspringt.

Der Meridianstab 5 setzt sich zwischen den beiden Außenstäben 2 und 3 fort. In diesem Bereich ist der dort die Querschnittsform eines gleichseitigen Dreiecks aufweisende Meridianstab 5 verdrillt und es greift der Meridianstab 5 im Bereich zwischen den beiden Außenstäben 2 und 3 seitlich versetzt an diesen an. Die Angriffspunkte befinden sich somit nicht in einer Achse parallel zur zentralen Achse 4, sondern es ist diese Angriffsachse des Meridianstabs 5 zwischen den beiden Außenstäben 2 und 3, ausgehend von einer Parallelen zur zentralen Achse 4, um einen gewissen Winkel geneigt. Der Meridianstab 5 ist zwischen den beiden Außenstäben 2 und 3 gleichfalls-so angeordnet, dass er außen im wesentlichen eine Ebene mit der Außenkontur der Außenstäbe 2 und 3 bildet, somit der Meridianstab 5 zwischen den beiden Außenstäben 2 und 3 nicht außen über diesen hinaussteht.

Der Meridianstab 5 setzt sich, ausgehend vom Außenstab 3, in den Bereich des Achsendes 7 des Füllkörpers 1 fort. Der Querschnitt des Meridianstabs 5 ist in diesem Bereich gleichfalls L-förmig, allerdings bezüglich des Schenkels 11 gespiegelt. Somit ist der Schenkel 11 des L-förmigen Meridianstabs 5 im unteren Teilbereich 10 des Füllkörpers 1 gleichfalls nach außen gerichtet, der Schenkel 12 des L allerdings in entgegengesetzter Richtung, bezogen auf die Richtung 12 des Meridianstabs 5 im oberen Teilbereich.

Aufgrund dieser Gestaltung ergibt sich bezüglich der Außenkontur des Füllkörpers 1 folgende Situation: Die nach außen gerichteten Schenkel 11 der sechzehn Meridianstäbe 5 unterteilen den Kreisquerschnitt des Füllkörpers 1 gleichmäßig. Bei dem veranschaulichten Meridianstab 5a ist der Schenkel- 12 zum benachbarten Meridianstab 5b gerichtet, dessen Schenkel 12 auf den Schenkel 12 des Meridianstabs 5a gerichtet ist. Demzufolge sind dem Meridianstab 5b und dem zu diesem benachbarten Meridianstab 5c nur deren nach außen gerichtete Schenkel 11 zugewandt. Auf der dem Meridianstab 5b abgewandten Seite ist der Meridianstab 5c mit dem Schenkel 12 versehen. Dieser Schenkel 12 ist dem Schenkel 12 des dem Meridianstab 5c benachbarten Meridianstabs 5d zugewandt.

Benachbarte Meridianstäbe 5 sind im mittleren Teilbereich 9 des Füllkörpers 1 alternierend aufeinander zu bzw. voneinander weg versetzt. Ausgehend vom Außenstab 2 sind die Meridianstäbe 5a und 5b voneinander weg seitlich versetzt und die Meridianstäbe 5b und 5c aufeinander zu seitlich versetzt, die Meridianstäbe 5c und 5d wieder voneinander weg seitlich versetzt usw..

Aufgrund des seitlichen Versatzes der Meridianstäbe 5 im mittleren Teilbereich 9 des Füllkörpers 1 ergibt sich die seitlich versetzte Anordnung des jeweiligen Meridianstabs 5 im oberen Teilbereich 8 bzw. unteren Teilbereich 10. So ist im unteren Teilbereich 10 der Meridianstab 5a mit seinem Schenkel 12 vom benachbarten Meridianstab 5b weg gerichtet. Der Meridianstab 5b weist auf seiner dem diesem benachbarten Meridianstab 5c zugewandten Seite den Schenkel 12 auf. Der Schenkel 12 des Meridianstabs 5c ist in Richtung des Meridianstabs 5b gerichtet. Folglich sind zwischen den Meridianstäben 5c und 5d im unteren Teilbereich 10 des Füllkörpers 1 keine Schenkel 12 vorgesehen.

Der jeweilige Meridianstab 5 verläuft im oberen Teilbereich 8 und unteren Teilbereich 10 des Füllkörpers 1 gewellt. In diesem Teilbereich weist der jeweilige Meridianstab 5 drei erhöhte Bereiche 13 und zwei vertiefte Bereichte 14 aufgrund des wellenförmigen Verlaufs auf.

Der Querschnitt der Außenstäbe 2 und 3 ist dreieckförmig. Die durch die Dreieckform bedingte Verjüngung von Außenstab 2 bzw. 3 ist zwischen benachbarten Meridianstäben, die keine aufeinander zugewandte Schenkel 12 aufweisen, beispielsweise die Meridianstäbe 5b und 5c des oberen Teilbereichs 8 des Füllkörpers 1, nach innen gerichtet, während die Verjüngung bei benachbarten Meridianstäben 5, die aufeinander zu gerichtete Schenkel 12 aufweisen, beispielsweise die Meridianstäbe 5a und 5b des oberen Teilbereichs 8, nach außen gerichtet ist. Die Außenstäbe 2 und 3 sind in denjenigen Bereichen, in denen deren Verjüngung nach außen gerichtet ist, mit Abtropfnasen 15 versehen, wobei jeweils eine Abtropfnase 15 zwischen zwei benachbarten Meridianstäben 5 angeordnet ist.

Bezogen auf das Innere des Füllkörpers 1 ist dieser mit einer Vielzahl parallel zur zentralen Achse 4 angeordneter Innenstäbe 16 versehen, die auf der dem Inneren des Füllkörpers 1 zugewandten Seite mit den Meridianstäben 5, in Endbereichen der Meridianstäbe oder Zwischenbereichen der Meridianstäbe, mit diesen verbunden sind. Ein Teil der Innenstäbe 16 ist unterbrochen, so dass im Bereich des jeweiligen freien Endes des unterbrochenen Innenstabes 16, somit des dem Meridianstab 5 abgewandten Endes, eine Abtropfstelle 17 gebildet ist. Im Inneren des Füllkörpers 1 sind schließlich im Bereich der Achsenden 6 und 7 konzentrisch zur zentralen Achse 4 zwei Ringe 18 gebildet, in denen Innenstäbe 16, die mit den Meridianstäben 5 im Bereich deren Enden verbunden sind, gehalten sind.

## Patentansprüche

1. Gitterförmiger Füllkörper (1), insbesondere für Stoff- und/oder Wärmeaustauschkolonnen, die von einer Gas- und/oder Flüssigkeitsströmung durchsetzt werden, mit die Außenkontur des Füllkörpers (1) bildenden Außenstäben (2, 3, 5) und im Inneren des Füllkörpers (1) angeordneten Innenstäben (16), wobei der Füllkörper (1) eine einem Ellipsoid ähnliche Form aufweist und mindestens zwei in Abstand zueinander angeordnete umlaufende Außenstäbe (2, 3) aufweist, die senkrecht zu anderen Außenstäben (5) angeordnet sind, **dadurch gekennzeichnet, dass** der Füllkörper zwei Teilbereiche (8, 10) eines annähernden Rotationsellipsoids, sowie einen zwischen den beiden Teilbereichen (8, 10) angeordneten zylindrischen Bereich (9) aufweist, sowie im Übergang vom jeweiligen die Form eines annähernden Rotationsellipsoids aufweisenden Teilbereich (8,10) zum zwischen den Teilbereichen (8, 10) angeordneten zylindrischen Bereich (9), einer der mindestens zwei umlaufenden Außenstäbe (2, 3) angeordnet ist.

2. Füllkörper nach Anspruch 1, **dadurch gekennzeichnet, dass** die umlaufenden Außenstäbe (2, 3) parallel zueinander angeordnet sind.

3. Füllkörper nach Anspruch 1 oder 2, **dadurch gekennzeichnet, dass** die umlaufenden Außenstäbe (2, 3) in Ebenen senkrecht zu einer Rotationsachse (4) des annähernden Rotationsellipsoids angeordnet sind.

4. Füllkörper nach einem der Ansprüche 1 bis 3, **dadurch gekennzeichnet, dass** er aus Kunststoff, Metall oder Keramik besteht.

5. Füllkörper nach einem der Ansprüche 1 bis 4, **dadurch gekennzeichnet, dass** die umlaufenden Außenstäbe (2, 3) außen mit der Außenkontur der anderen Außenstäbe (5) im Kreuzungsbereich der Außenstäbe fluchten.

6. Füllkörper nach einem der Ansprüche 1 bis 5, **dadurch gekennzeichnet, dass** Außen- (2, 3 5) und/oder Innenstäbe (16) eine einem Dreieck, einem Trapez, einem L, einem Kreuz oder einem Rechteck identische Querschnittsform aufweisen.

7. Füllkörper nach Anspruch 6, **dadurch gekennzeichnet, dass** Außenstäbe (2, 3, 5) eine sich verjüngende Querschnittsform aufweisen, wobei die Verjüngung dieser Außenstäbe (2, 3, 5) in überwiegender Weise nach außen gerichtet ist.

8. Füllkörper nach einem der Ansprüche 1 bis 7, **dadurch gekennzeichnet, dass** Außenstäbe (2, 3, 5) und/oder Innenstäbe (16) eine Längs- und/oder Querprofilierung aufweisen.

9. Füllkörper nach einem der Ansprüche 1 bis 8, **dadurch gekennzeichnet, dass** andere Außenstäbe (5) in deren Längsrichtung verdrillt gestaltet sind, insbesondere im Bereich zwischen den beiden, in den Übergängen angeordneten, umlaufenden Außenstäben (2, 3) andere Außenstäbe, (5) verdrillt gestaltet sind.

10. Füllkörper nach einem der Ansprüche 1 bis 9, **dadurch gekennzeichnet, dass** im Bereich zwischen den beiden, in den Übergängen angeordneten, umlaufenden Außenstäben (2, 3) andere Außenstäbe (5), bezogen auf die Umfangserstreckung der umlaufenden Außenstäbe (2, 3), seitlich versetzt an diesen beiden umlaufenden Außenstäben (2, 3) angreifen.

11. Füllkörper nach einem der Ansprüche 1 bis 10, **dadurch gekennzeichnet, dass** Außenstäbe (2, 3, 5) gewellt verlaufen.

## Claims

1. Grid-like packing element (1), in particular for mass transfer and/or heat exchange columns which are passed through by a gas and/or liquid flow, having outer rods (2, 3, 5) forming the outer contour of the packing element (1) and inner rods (16) arranged inside the packing element (1), wherein the packing element (1) has a shape resembling an ellipsoid and has at least two circumferential outer rods (2, 3) which are arranged at a distance from one another and are arranged perpendicularly with respect to other outer rods (5), **characterized in that** the packing element has two partial regions (8, 10) of an approximate rotational ellipsoid and has a cylindrical region (9) arranged between the two partial regions (8, 10), and one of the at least two circumferential outer rods (2, 3) is arranged at the crossover from the respective partial region (8, 10) having the form of an approximate rotational ellipsoid to the cylindrical region (9) arranged between the partial regions (8, 10).

2. Packing element according to Claim 1, **characterized in that** the circumferential outer rods (2, 3) are arranged parallel to one another.

3. Packing element according to Claim 1 or 2, **characterized in that** the circumferential outer rods (2, 3) are arranged in planes which are perpendicular to an axis of rotation (4) of the approximate rotational ellipsoid.

4. Packing element according to one of Claims 1 to 3, **characterized in that** it consists of plastic, metal or ceramic.

5. Packing element according to one of Claims 1 to 4, **characterized in that,** in the crossing region of the outer rods, the circumferential outer rods (2, 3) are, on the outside, flush with the outer contour of the other outer rods (5).

6. Packing element according to one of Claims 1 to 5, **characterized in that** the outer rods (2, 3, 5) and/or inner rods (16) have a cross-sectional shape identical to a triangle, a trapezium, an L, a cross or a rectangle.

7. Packing element according to Claim 6, **characterized in that** outer rods (2, 3 5) have a tapering cross-sectional shape, wherein the tapering of the said outer rods (2, 3, 5) is directed predominantly outwards.

8. Packing element according to one of Claims 1 to 7, **characterized in that** outer rods (2, 3, 5) and/or inner rods (16) have a longitudinal and/or transverse profiling.

9. Packing element according to one of Claims 1 to 8, **characterized in that** other outer rods (5) are formed in a twisted manner in their longitudinal direction, in particular other outer rods (5) are formed in a twisted manner in the region between the two circumferential outer rods (2, 3) arranged at the crossovers.

10. Packing element according to one of Claims 1 to 9, **characterized in that**, in the region between the two circumferential outer rods (2, 3) arranged at the crossovers, other outer rods (5) engage with the said two circumferential outer rods (2, 3) in a laterally offset manner with respect to the circumferential extent of the circumferential outer rods (2, 3).

11. Packing element according to one of Claims 1 to 10, **characterized in that** outer rods (2, 3, 5) extend in an undulating manner.

## Revendications

1. Corps de remplissage (1) en forme de grille, en particulier pour colonnes échangeuses de matière et/ou de chaleur traversées par un écoulement de gaz et/ou de liquide,
avec des barreaux extérieurs (2, 3, 5) qui forment le contour extérieur du corps de remplissage (1) et des barreaux intérieurs (16) disposés à l'intérieur du corps de remplissage (1),
le corps de remplissage (1) présentant une forme rappelant celle d'un ellipsoïde et au moins deux barreaux extérieurs périphériques (2, 3) disposés à distance mutuelle et perpendiculairement aux autres barreaux extérieurs (5),
**caractérisé en ce que**
le corps de remplissage présente deux parties (8, 10) dont la forme rappelle celle d'un ellipsoïde de rotation ainsi qu'une partie cylindrique (9) disposée entre les deux parties (8, 10) et
**en ce que** l'un des deux ou plusieurs barreaux extérieurs périphériques (2, 3) est disposé à la transition entre chaque partie (8, 10) dont la forme rappelle celle d'un ellipsoïde de rotation et la partie cylindrique (9) disposée entre les parties (8, 10).

2. Corps de remplissage selon la revendication 1,
**caractérisé en ce que** les barreaux extérieurs périphériques (2, 3) sont disposés parallèlement l'un à l'autre.

3. Corps de remplissage selon les revendications 1 ou 2, **caractérisé en ce que** les barreaux extérieurs périphériques (2, 3) sont disposés dans des plans perpendiculaires à un axe de rotation (4) du volume dont la forme rappelle celle d'un ellipsoïde de rotation.

4. Corps de remplissage selon l'une des revendications 1 à 3, **caractérisé en ce qu'**il est constitué de matière synthétique, de métal ou de céramique.

5. Corps de remplissage selon l'une des revendications 1 à 4, **caractérisé en ce que** les barreaux extérieurs périphériques (2, 3) sont alignés du côté extérieur sur le contour extérieur des autres barreaux extérieurs (5) au niveau du croisement des barreaux extérieurs.

6. Corps de remplissage selon l'une des revendications 1 à 5, **caractérisé en ce que** des barreaux extérieurs (2, 3, 5) et/ou des barreaux intérieurs (16) présentent une section transversale dont la forme est identique à celle d'un triangle, d'un trapèze, d'un L, d'une croix ou d'un rectangle.

7. Corps de remplissage selon la revendication 6,
**caractérisé en ce que** des barreaux extérieurs (2, 3, 5) présentent une section transversale de forme effilée, le rétrécissement de ces barreaux extérieurs (2, 3, 5) étant principalement orienté vers l'extérieur.

8. Corps de remplissage selon l'une des revendications 1 à 7, **caractérisé en ce que** des barreaux extérieurs (2, 3, 5) et/ou des barreaux intérieurs (16) présentent une profilation longitudinale et/ou une profilation transversale.

9. Corps de remplissage selon l'une des revendications 1 à 8, **caractérisé en ce que** d'autres barreaux extérieurs (5) sont torsadés dans le sens de leur longueur, et notamment d'autres barreaux extérieurs (5) disposés entre les deux barreaux extérieurs (2, 3) périphériques situés dans les transitions sont torsadés.

10. Corps de remplissage selon l'une des revendications 1 à 9, **caractérisé en ce qu'**entre les deux barreaux extérieurs (2, 3) périphériques disposés aux transitions, d'autres barreaux extérieurs (5) engagent les deux barreaux extérieurs périphériques (2, 3) en décalage latéral par rapport aux barreaux extérieurs périphériques (2, 3) dans la direction périphérique.

11. Corps de remplissage selon l'une des revendications 1 à 10, **caractérisé en ce que** les barreaux extérieurs (2, 3, 5) sont ondulés.
